## Europäisches Patentamt
## European Patent Office
## Office européen des brevets

(19)

(11) Veröffentlichungsnummer: **0 021 110**
**B1**

# EUROPÄISCHE PATENTSCHRIFT

(12)

(45) Veröffentlichungstag der Patentschrift:
**22.12.82**

(21) Anmeldenummer: **80103014.9**

(22) Anmeldetag: **30.05.80**

(51) Int. Cl.³: **F 16 K 41/16, F 16 K 5/06**

(54) **Kugelhahn.**

(30) Priorität: **07.06.79 DE 2923104**

(43) Veröffentlichungstag der Anmeldung:
**07.01.81 Patentblatt 81/1**

(45) Bekanntmachung des Hinweises auf die Patenterteilung:
**22.12.82 Patentblatt 82/51**

(84) Benannte Vertragsstaaten:
**AT BE CH DE FR GB IT LI NL SE**

(56) Entgegenhaltungen:
**BE-A-681 336**
**DE-B-2 241 521**
**DE-B-2 730 492**
**DE-U-1 934 857**
**DE-U-7 815 061**
**FR-A-2 336 615**
**US-A-3 239 191**
**US-A-3 351 351**
**US-A-3 698 684**
**US-A-3 948 480**

(73) Patentinhaber: **Klinger AG, Baarerstrasse 10,
CH-6301 Zug (CH)**

(72) Erfinder: **Lucas, Rafael Jimenez, Sackstrasse 31,
D-6250 Limburg (DE)**

(74) Vertreter: **Dipl.-Ing. H. Marsch Dipl.-Ing. K. Sparing
Dipl.-Phys.Dr. W.H. Röhl Patentanwälte,
Rethelstrasse 123, D-4000 Düsseldorf (DE)**

„Kugelhahn"

Die Erfindung betrifft einen Kugelhahn gemäss dem Oberbegriff des Anspruchs 1.

Ein derartiger Kugelhahn ist aus der US-A Nr. 3239191 bekannt, bei dem eine Mutter auf dem Bewegungsbolzen angeordnet ist, die zwei Tellerfedern derart vorspannt, dass durch den Bund am Bewegungsbolzen im Inneren des Gehäuses des Kugelhahns und durch den Ring zwei um den Bewegungsbolzen angeordnete Dichtungen in entsprechenden Gehäuseausnehmungen festgeklemmt werden, wobei der Bewegungsbolzen direkt in einer entsprechenden Bohrung des Gehäuses geführt und durch die Tellerfedern in seiner axialen Position gehalten wird. Hierdurch ergibt sich aber eine Beeinträchtigung der Dichtungsfunktion mit entsprechendem Verschleiss dadurch, dass Befestigungskraft und Dichtungskraft kombiniert sind, so dass bei Betätigung des Kugelhahns die Bewegungskräfte auch auf die Dichtungen übertragen werden, die hierdurch einem vorzeitigen Verschleiss unterliegen.

Die US-A Nr. 3351351 betrifft einen Kugelhahn, bei dem die Dichtungskraft unabhängig von der Befestigungskraft ist. Hier ist ein zusätzlicher Aufbau zur Lagerung des Bewegungsbolzens vorgesehen und die Dichtung ausserhalb des Gehäuses angeordnet. Im allgemeinen Armaturenbau muss jedoch der Aufwand so gering wie möglich gehalten werden, und es sind daher weitgehend nur Konstruktionen im Einsatz, bei denen kein zusätzlicher Aufbau zur Lagerung des Bewegungsbolzens vorgesehen ist, und daher die Dichtung zwischen Gehäuse und Bewegungsbolzen im Gehäuse angeordnet sein muss, wie es auch bei der US-A Nr. 3239191 der Fall ist. Abgesehen von den mit dem zusätzlichen Gehäuseaufbau verbundenen Kosten existiert bei dem Kugelhahn der US-A Nr. 3351351 ausserdem noch ein wesentlicher funktioneller Mangel, da nach Lösen oder Zerstören der Schrauben die den Bolzen aufnehmende Gehäusebohrung zur Gänze unabgedichtet frei liegen würde. Dies ist jedoch vielfach — insbesondere beim Transport von gefährlichen und brennbaren Meiden — unzulässig.

Aufgabe der Erfindung ist es, einen Kugelhahn nach dem Oberbegriff des Anspruchs 1 zu schaffen, der zu einer wesentlichen Herabsetzung des Verschleisses und damit zu einer erhöhten Lebensdauer in bezug auf die Dichtungsfunktion des Kugelhahns führt, und bei dem trotzdem die Dichtungsanordnung zwischen Gehäuse und Bewegungsbolzen im Gehäuse angeordnet sowie sichergestellt ist, dass die den Bewegungsbolzen aufnehmende Gehäusebohrung nicht unabgedichtet freiliegen kann.

Diese Aufgabe wird entsprechend dem kennzeichnenden Teil des Anspruchs 1 gelöst.

Hierdurch ergibt sich eine Trennung zwischen der Kraftbeaufschlagung durch die Befestigungs- und die Dichtungskraft. Die Dichtungsfunktion ist unabhängig vom Betätigungsorgan. Auf diese Weise kann eine Wartungsfreiheit bis zu beispielsweise 50 000 Schaltungen (Trockenlauf) gewährleistet werden.

Ferner kann die Kappe die Tellerfedern übergreifen und auch als Anschlag ausgebildet sein, wobei letzteres zu einer eindeutigen Fixierung der Fliess- und der Öffnungsrichtung führt und ausserdem die Fixierung der Schaltstellung unabhängig vom Betätigungsorgan ist.

Weitere Ausgestaltungen der Erfindung sind der nachfolgenden Beschreibung und den Unteransprüchen zu entnehmen.

Die Erfindung wird nachfolgend anhand des in den beigefügten Abbildungen dargestellten Ausführungsbeispiels näher erläutert.

Fig. 1 zeigt einen Kugelhahn ausschnittsweise im Schnitt,

Fig. 2 zeigt eine Draufsicht auf den Kugelhahn von Fig. 1 in Richtung des dort gezeigten Pfeils.

Der dargestellte Kugelhahn besitzt ein Gehäuse 1 mit einer Bohrung 2, in der eine Kugel 3 drehbar angeordnet ist, die mit einer Durchtrittsöffnung 4 versehen ist (die Dichtungen für die Kugel 3 sind nicht dargestellt), so dass die Kugel 3 von einer Offenstellung kontinuierlich in eine Schliessstellung drehbar ist.

Die Kugel 3 wird mit Hilfe eines Bewegungsbolzens 5 gedreht, der mit einem Zapfen 5a in eine Ausnehmung 3a in der Kugel 3 kraftschlüssig in Eingriff steht. Der Bewegungsbolzen 5 besitzt benachbart zu dem Zapfen 5a einen Bund 5b, der sich über zwei ringförmige Gleitscheiben 6, 6' in einer durch eine Schulter 1a begrenzten Ausnehmung im Inneren des Gehäuses 1 abstützt.

Der Bewegungsbolzen 5 erstreckt sich durch eine Bohrung 7, die gegenüber dem Bewegungsbolzen 5 einen vergrösserten Durchmesser aufweist, aus dem Gehäuse 1 heraus, ist an seinem äusseren Ende mit Gewinde versehen und zum Anbringen eines Betätigungsorgans ausgebildet.

Der Bewegungsbolzen 5 ist konzentrisch in einer Dichtungsbuchse 8 angeordnet, die sich in der Bohrung 7 des Gehäuses 1 befindet. Beidseitig der Dichtungsbuchse 8 ist in axialer Richtung jeweils ein konzentrischer Druckring 9 bzw. 9' angeordnet, wobei der axial innen liegende Druckring 9 mit der axial inneren Gleitscheibe 6 in Eingriff steht, während die axial äussere Gleitscheibe 6' sich um den Aussenumfang des Druckrings 9 erstreckt. Der axial äussere Druckring 9' grenzt an zwei gegeneinander gerichtete Tellerfedern 10, die in einer Ausnehmung 11 einer Kappe 12 angeordnet sind und sich einerseits gegen den axial äusseren Druckring 9' und andererseits gegen die Stirnfläche der Ausnehmung 11 abstützen.

Die Kappe 12 ist auf dem Ende einer Zweikantschlüsselweite des Bewegungsbolzens 5 angeordnet und wird mittels einer Mutter 13, etwa einer Sechskantmutter, die auf den Bewegungsbolzen 5 geschraubt ist, gegenüber dem Gehäuse 1 verspannt. Zwei ringförmige Gleitscheiben 14 erstrecken sich über den Bereich der Ausnehmung 11 der Kappe 12 bis zu dem Umfang des axial äusseren Druckringes 9' zwischen der Kappe 12 und der dieser zugewandten Seite des Gehäuses 1, und sind daher zwischen der Kappe 12 und dem Gehäuse 1 geklemmt.

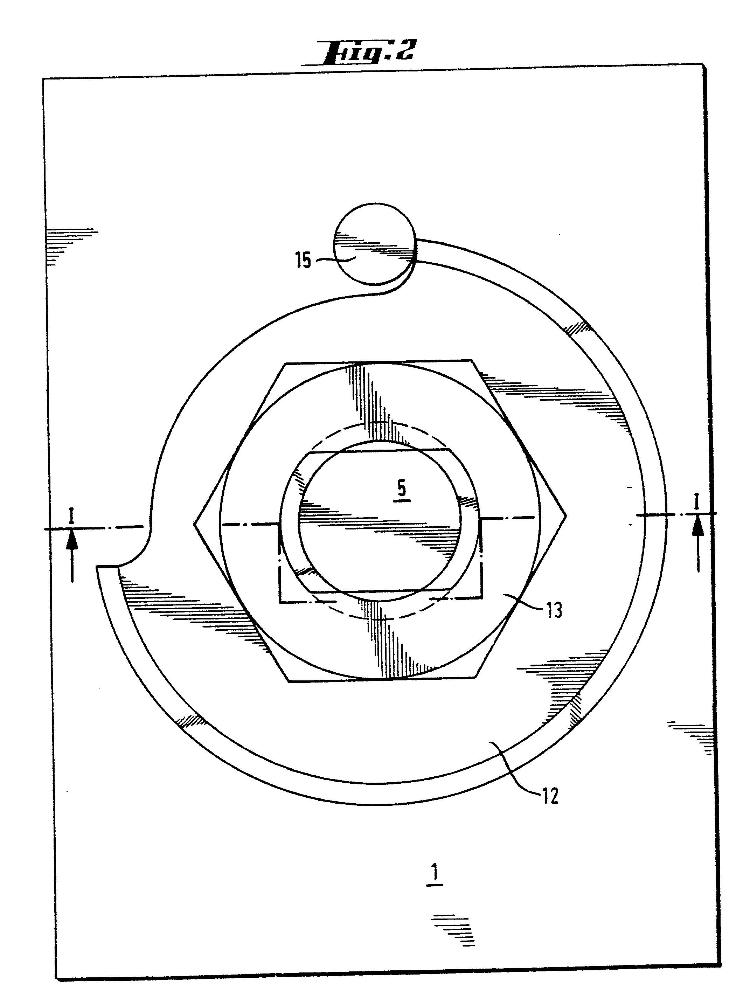

Wie aus Fig. 2 ersichtlich ist, ist die Kappe 12 als Anschlagkappe ausgebildet und besitzt zu diesem Zweck eine sich über etwa 90° ihres Umfangs erstreckende Ausnehmung, deren Ende als Anschläge für einen Anschlagstift 15, etwa einen Zylinderkerbstift, dienen. Hierdurch wird auch eine versehentlich falsche Montage ausgeschlossen.

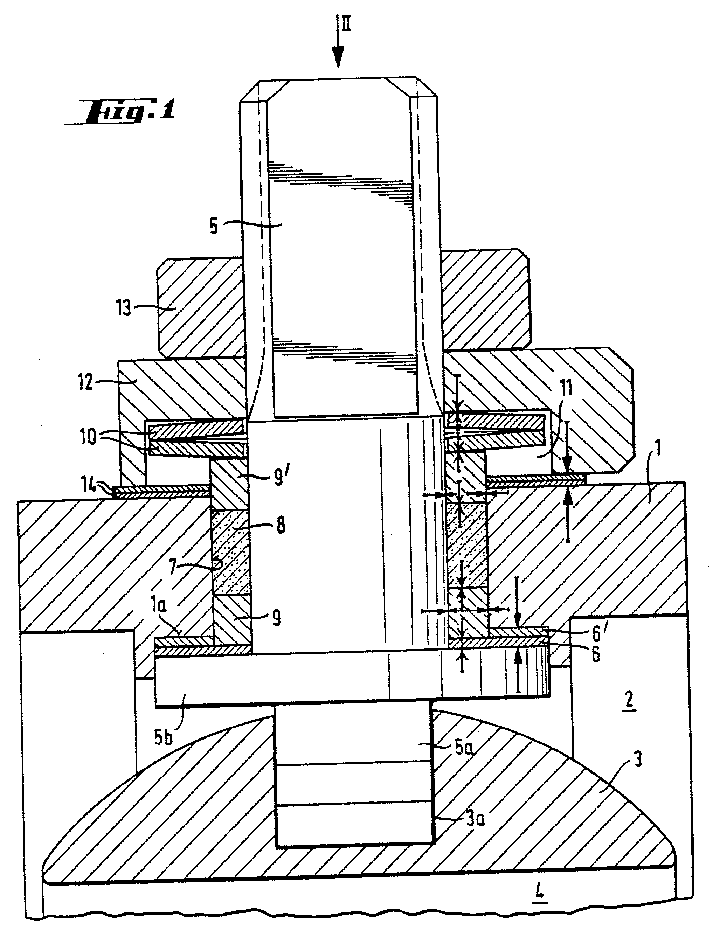

Bei einem derartigen Kugelhahn ist die Dichtungsfunktion unabhängig von der Betätigungsfunktion, da die Mutter 13, die unter dem Betätigungsorgan angeordnet ist, die Kappe 12 gegen das Ende der Zweikantschlüsselweite des Betätigungsbolzens 5 und damit gegen das Gehäuse 1 und damit unabhängig vom Betätigungsorgan festspannt. Zu diesem Zweck besitzt die Kappe 12 eine mittlere Ausnehmung entsprechend der Zweikantschlüsselweite mit ovaler Form. (Es kann jedoch auch ein anderer Eingriff zwischen der Kappe 12 und dem Betätigungsbolzen 5 vorgesehen sein.) Der Betätigungsbolzen 5 wird somit in seiner Lage fixiert und gehalten. Die in axialer Richtung des Betätigungsbolzens 5 wirkende Befestigungskraft wird über die Teile 12, 1 und 5 geleitet, während die radiale Komponente über die Teile 5, 9, 9' und 1 geleitet wird (grosse bzw. kleine Pfeile in Fig. 1).

Die Dichtungskraft der Tellerfedern 10 wirkt über die Druckringe 9, 9' auf die Dichtungsbuchse 8 (geschweifte Pfeile von Fig. 1). Durch diese Trennung der Kraftbeaufschlagung wird ein konstanter, zulässiger Druck auf die Dichtungsbuchse 8 erreicht, der deren Lebensdauer stark verlängert und die darauf ausgeübten Betätigungsmomente erheblich senkt, während eine Beaufschlagung der Dichtungsbuchse 8 durch Befestigungskräfte praktisch ausgeschaltet wird, da diese über die Kappe 12 abgeleitet werden.

Da zwischen der Kappe 12 und dem Bund 5b des Betätigungsbolzens 5 die Gleitscheiben 6, 6' und 14 aufgrund der Mutter 13 geklemmt sind, wird das Betätigungsmoment an sich ferner durch die beiden Gleitscheiben 6, 6' bzw. 14 verringert.

## Patentansprüche

1. Kugelhahn mit einem Gehäuse (1), in dem über einen dort abgedichteten Bewegungsbolzen (5) eine Kugel (3) drehbar angeordnet ist, wobei der Bewegungsbolzen (5) benachbart der Kugel (3) einen sich von innen am Gehäuse (1) abstützenden Bund (5b) aufweist, und wobei am Bewegungsbolzen (5) ausserhalb des Gehäuses (1) angeordnete Tellerfedern (10) zur Pressung der im Gehäuse (1) angeordneten Dichtungsanordnung (8, 9, 9') an einer Mutter (13) abgestützt sind, dadurch gekennzeichnet, dass eine zwischen Mutter (13) und Tellerfedern (10) mit dem Bewegungsbolzen (5) drehbar verbundene Kappe (12) vorgesehen ist, welche sich, die Tellerfedern übergreifend, am Gehäuse (1) abstützt, wobei sich der Bund (5b) des Bewegungsbolzens (5) an einem sich radial über die Dichtungsanordnung (8, 9, 9') hinaus erstreckenden Bereich (1a) im Gehäuse (1) abstützt.

2. Kugelhahn nach Anspruch 1, dadurch gekennzeichnet, dass sich die Kappe (12) über eine Gleitscheibenanordnung (14) gegenüber dem Gehäuse (1) abstützt.

3. Kugelhahn nach einem der beiden Ansprüche 1 oder 2, dadurch gekennzeichnet, dass zwischen dem Bund (5b) des Bewegungsbolzens (5) und dem Gehäuse (1) eine Gleitscheibenanordnung (6, 6') angeordnet ist.

4. Kugelhahn nach einem der Ansprüche 1 bis 3, dadurch gekennzeichnet, dass der Bewegungsbolzen (5) in einer Dichtungsbuchse (8) angeordnet ist, zu der in axialer Richtung auf beiden Seiten jeweils ein Druckring (9, 9') einerseits an dem Bund (5b) und andererseits an den Tellerfedern (10) abgestützt vorgesehen ist.

5. Kugelhahn nach einem der Ansprüche 1 bis 4, dadurch gekennzeichnet, dass die Kappe (12) als Anschlagstück ausgebildet ist.

## Claims

1. Ball valve with a housing (1), in which a ball (3) is rotatably mouted in relation to an adjustment pin (5) sealed therein, the adjustment pin (5) having, adjacent to the ball (3), a collar (5b) supported on the interior of the housing (1), and Belleville spring washers (10) being mounted on a nut (13) externally of the housing (1) and so as to apply pressure against a seal assembly (8, 9, 9') within the housing (1), characterized in this that a cap (12) is provided which is mounted for rotation on the adjustment pin (5) between the nut (13) and the Belleville spring washers (10), which engages over the Belleville washers and is supported on the housing (1), the collar (5b) of the adjustment pin (5) being supported on a zone (1a) within the housing (1) extending radially outwardly of the seal assembly (8, 9, 9').

2. Ball valve according to claim 1, characterized in this that the cap (12) is supported against the housing (1) by a slide disc assembly (14).

3. Ball valve according to claim 1 or 2, characterized in this that a slide disc assembly (6, 6') is mounted between the collar (5b) of the adjustment pin (5) and the housing (1).

4. Ball valve according to one of claims 1 to 3, characterized in this that the adjustment pin (5) is mounted in a sealing bush (8), on which in the axial direction on both sides there is a respective sealing ring (9, 9') supported on the one hand on the collar (5b) and on the other hand against the Belleville washers (10).

5. Ball valve according to one of claims 1 to 4, characterized in this that the cap (12) acts as a stop member.

## Revendications

1. Robinet à tournant sphérique comprenant un corps (1) dans lequel un tournant sphérique (3) est monté rotatif par l'intermédiaire d'une tige d'entraînement (5) montée à joint étanche dans ce corps, la tige d'entraînement (5) comportant, à proximité du tournant sphérique (3), un collet (5b) qui prend appui de l'intérieur contre le corps (1) et des ressorts à disques (10) montés sur la tige d'entraînement (5) à l'extérieur du corps (1) pour comprimer le dispositif d'étanchéité (8, 9, 9') disposé dans le corps (1) prenant appui contre un écrou (13), caractérisé en ce qu'entre l'écrou (13) et les ressorts à disques (10) est monté un chapeau 12 fixé solidairement en rotation à la tige d'entraînement (5), lequel prend appui sur le corps (1) en coiffant les ressorts à disques, cependant que le collet (5b) de la tige d'entraînement (5) prend appui dans le corps (1) sur une région qui déborde radialement au-delà du dispositif d'étanchéité (8, 9, 9').

2. Ressort à tournant sphérique suivant la revendication 1, caractérisé en ce que le chapeau (12) prend appui sur le corps (1) par l'intermédiaire d'un dispositif à rondelles de glissement (14).

3. Robinet à tournant sphérique suivant l'une des revendications 1 ou 2, caractérisé en ce qu'un dispositif à rondelles de glissement (6, 6') est disposé entre le collet (5b) de la tige d'entraînement (5) et le corps (1).

4. Robinet à tournant sphérique suivant l'une des revendications 1 à 3, caractérisé en ce que la tige d'entraînement (5) est montée dans une fourrure d'étanchéité (8) sur les deux côtés, dans la direction axiale, où sont prévues des bagues de serrage (9, 9') prenant appui, d'une part, contre le collet (5b) et, d'autre part, contre les ressorts à disques (10).

5. Robinet à tournant sphérique suivant l'une des revendications 1 à 4, caractérisé en ce que le chapeau (12) est réalisé sous la forme d'une pièce de butée.

**Fig.1**

# Fig.2